# EUROPÄISCHE PATENTSCHRIFT

(11) **EP 2 652 285 B1**
(45) Veröffentlichungstag und Bekanntmachung des Hinweises auf die Patenterteilung: **08.08.2018**
(21) Anmeldenummer: 11804667.1
(22) Anmeldetag: 17.12.2011
(51) Int. Cl.: F02B 29/04, F01P 3/18, F01P 7/16, F28D 3/02, F28F 1/00, F28F 9/02

(54) **VORRICHTUNG ZUR KÜHLUNG VON LADELUFT, SYSTEM ZUM KONDITIONIEREN VON LADELUFT UND ANSAUGMODUL FÜR EINEN VERBRENNUNGSMOTOR**
DEVICE FOR COOLING CHARGE AIR, SYSTEM FOR CONDITIONING CHARGE AIR AND INTAKE MODUL FOR COMBUSTION ENGINE
DISPOSITIF DE REFROIDISSEMENT DE L'AIR SURALIMENTÉ, ET MODULE DE REFROIDISSEMENT DE L`AIR DE SURALIMENTATION

(30) Priorität: 17.12.2010 DE 102010063324
(43) Veröffentlichungstag der Anmeldung: 23.10.2013
(73) Patentinhaber: MAHLE Behr GmbH & Co. KG, 70469 Stuttgart (DE); Mahle International GmbH, 70376 Stuttgart (DE)
(72) Erfinder: EILEMANN, Andreas, 71729 Erdmannhausen (DE); STEHLIG, Jürgen, 72654 Neckartenzlingen (DE)
(74) Vertreter: Grauel, Andreas
(86) Internationale Anmeldenummer: PCT/EP2011/073154
(87) Internationale Veröffentlichungsnummer: WO 2012/080508

(56) Entgegenhaltungen:
- EP-A2- 1 111 217
- EP-A2- 2 161 429
- WO-A1-2004/113815
- DE-A1-102005 049 310
- FR-A1- 2 895 451

## Beschreibung

Die vorliegende Erfindung bezieht sich auf eine Vorrichtung zur Kühlung von Ladeluft für einen Verbrennungsmotor eines Fahrzeugs, ein Ansaugmodul zum Versorgen eines Verbrennungsmotors eines Fahrzeugs mit verdichteter und gekühlter Ladeluft und auf ein System zum Konditionieren von Ladeluft für einen Verbrennungsmotor eines Fahrzeugs.

Der immer stärker zunehmende Trend des Downsizings bei Pkw-Motoren wird vielfach durch die Einführung turboaufgeladener Motoren erreicht. Während die Ladedrücke bisher noch relativ niedrig waren, nimmt insbesondere bei Dieselmotoren der Ladedruck schnell weiter zu. Aber auch bei Ottomotoren steigen die Werte kontinuierlich an. Damit steigen auch die Temperaturen der Ladeluft deutlich, erreichen inzwischen bald die 200°C-Marke oder mehr. Steigende Ladedrücke bei aufgeladenen Motoren erhöhen die Anforderungen zur Ladeluftkühlung damit erheblich, insbesondere, wenn die Zieltemperatur der Ladeluft weiter gesenkt wird. Es müssen daher Ladeluftkühler entwickelt werden, die diesen Herausforderungen gewachsen sind.

Eine einfache Ladeluftkühlung wird durch direkte, luftgekühlte Ladeluftkühler in kompakter oder flächiger Bauform erreicht. Mit Limitierung des Bauraumes wurden für leistungsstarke Motoren indirekte, kühlmittelgekühlte Ladeluftkühler entwickelt, die durch besseren Wärmeübergang zwischen Ladeluft und Kühlmittel bzw. zwischen Kühlmittel und Umgebungsluft bei Betrieb im Niedertemperaturkühlmittelkreis eine Leistungssteigerung der Ladeluftkühlung erlauben. Zur weiteren Leistungserhöhung werden die flächigen Niedertemperaturkühler durch Radhauskühler ergänzt, um eine hohe Wärmeabfuhr aus dem Niedertemperaturkühlmittelkreis noch gewährleisten zu können. Ist dies nicht mehr zielführend, kann auch die sogenannte "kaskadierte Kühlung" durch einen Hochtemperaturkreis und einen Niedertemperaturkreis eingeführt werden. Dabei kommen typischerweise zwei in Serie geschaltete Kühler zum Einsatz, wobei der erste die Ladeluft durch Verwendung von Kühlmittel aus dem Hochtemperaturkreislauf vorkühlt und der zweite, integriert in den Niedertemperaturkreislauf, eine effiziente Kühlung auf den Zielwert (Umgebungstemperatur + 15K oder ähnlich) erlaubt. So wird der Niedertemperaturkreislauf, der in der Regel mit geringerem Kühlmitteldurchsatz betrieben wird, entlastet, und die sich einstellende Ladelufttemperatur ist niedriger.

Die WO 2004/085810 A2 zeigt ein System zum Kühlen zumindest eines Teils eines Fahrzeugs mit einem Wärmeübertragungsfluidkreislauf. Das System umfasst einen Niedertemperaturwärmeübertrager und zumindest einen Gerätewärmeübertrager, dessen Wärmeübertragungsoberfläche in einen ersten und zweiten Wärmeübertragungsabschnitt geteilt ist, die von einem Wärmeübertragungsfluid durchflossen werden. Die EP 1 111 217 A2 zeigt einen Ladeluftkühler, der drei Wärmeübertragerblöcke enthält, die von unterschiedlichen Kühlkreisläufen beaufschlagt werden können.

Es ist die Aufgabe der vorliegenden Erfindung, eine verbesserte Vorrichtung zur Kühlung von Ladeluft für einen Verbrennungsmotor eines Fahrzeugs, ein verbessertes Ansaugmodul zum Versorgen eines Verbrennungsmotors eines Fahrzeugs mit verdichteter und gekühlter Ladeluft und ein verbessertes System zum Konditionieren von Ladeluft für einen Verbrennungsmotor eines Fahrzeugs zu schaffen.

Diese Aufgabe wird durch eine Vorrichtung gemäß Anspruch 1, ein Ansaugmodul gemäß Anspruch 6 sowie ein System gemäß Anspruch 7 gelöst.

Der vorliegenden Erfindung liegt die Erkenntnis zugrunde, dass mit einer Verbindung der "kaskadierten Kühlung" im Hoch- und Niedertemperaturkreislauf und einer kompakten Kühlerbauform, die eine Integration eines indirekt gekühlten Ladeluftkühlers in ein Saugrohr oder Ansaugmodul erlaubt, die Effizienz der Ladeluftkühlung gesteigert werden kann. Gemäß diesem Ansatz kann ein Ladeluftkühler realisiert werden, der in einem Bauteil beide Kreisläufe verbindet, dennoch sehr kompakt ist und in ein Saugrohr integriert werden kann. Eine entsprechende Bauform eines gemäß diesem Ansatz konzipierten Kühlers erlaubt somit eine Vorkühlung der Ladeluft durch den Hochtemperaturkreislauf und eine Kühlung der Ladeluft auf den Zielwert durch den Niedertemperaturkreislauf. Die Bauform kann dabei so kompakt realisiert werden, dass der Kühler in ein Ansaugmodul integrierbar ist.

Vorteilhafterweise kann gemäß dem hier vorgestellten Ansatz auf eine Verwendung von zwei nacheinander, unabhängig voneinander, zu montierenden Kühlern verzichtet werden, da eine Integration von zwei Kühlern in das Saugrohr eines modernen Motors sich als schwierig und aufwändig gestalten würde. Der hier vorgestellte Ansatz bringt aufgrund der Integration des Kühlers in das Saugrohr den Vorteil eines niedrigen Druckabfalls für die Ladeluft mit sich. Ferner kann Bauraum gespart werden, da ein Bauteil für eine Integration im Montageprozess des Saugrohrs ausreicht. Auch erlaubt eine Platzierung der Hochtemperatur- und Niedertemperaturkomponenten in unmittelbarer Nähe eines Saugrohrdrucksensors gegebenenfalls eine zusätzliche Integration von Regelungselementen.

Die vorliegende Erfindung schafft eine Vorrichtung zur Kühlung von Ladeluft für einen Verbrennungsmotor eines Fahrzeugs gemäß Anspruch 1.

Bei dem Verbrennungsmotor kann es sich z.B. um einen aufgeladenen Dieselmotor oder Ottomotor eines Personenkraftwagens oder eines Nutzfahrzeugs handeln. Bei der Ladeluft kann es sich um eine durch einen Verdichter des Fahrzeugs verdichtete und dadurch erwärmte Luftmenge handeln, die z.B. durch eine Ansaugöffnung eines Ansaugmoduls oder Saugrohrs des Fahrzeugs aus der Umgebungsluft entnommen und dem Verdichter zugeführt wurde. Die Vorrichtung kann im Wesentlichen als ein länglicher Quader ausgebildet sein, der zumindest teilweise ein Gehäuse für die Kühlmittelrohre aufweist. Eine Längserstreckung der Vorrichtung kann im Wesentlichen durch eine Länge der Kühlmittelrohre bestimmt werden, und eine Quererstreckung der Vorrichtung kann im Wesentlichen durch eine Anzahl der in der Quererstreckungsrichtung benachbart angeordneten Kühlmittelrohre bestimmt werden. Die Mehrzahl von ersten Kühlmittelrohren kann einen ersten Kühlerteil der Vorrichtung bilden und die Mehrzahl von zweiten Kühlmittelrohren kann einen zweiten Kühlerteil der Vorrichtung bilden.

Die Anzahl der ersten Kühlmittelrohre kann einer Anzahl der zweiten Kühlmittelrohre entsprechen. Alternativ kann sich die Anzahl der Kühlmittelrohre unterscheiden. Die Kühlmittelrohre können parallel zueinander angeordnet sein. Sie können z.B. einen runden oder elliptischen Querschnitt aufweisen und beispielsweise aus Metall bestehen. Die ersten und die zweiten Kühlmittelrohre können jeweils einen Stapel bildend übereinander angeordnet sein, wobei sich die einzelnen Kühlmittelrohre berühren können oder einen Abstand voneinander aufweisen können. In der Quererstreckungsrichtung der Vorrichtung können die Stapel von ersten und zweiten Kühlmittelrohren nebeneinander angeordnet sein. Auch hier können sich die Kühlmittelrohre der benachbarten Stapel berühren oder einen Abstand voneinander aufweisen. Eine Anzahl von übereinander angeordneten Kühlmittelrohren kann für die Mehrzahl von ersten Kühlmittelrohren und die Mehrzahl von zweiten Kühlmittelrohren gleich sein. Dabei ist die Anzahl übereinander angeordneter Kühlmittelrohre entsprechend den Gegebenheiten frei wählbar. So kann die Vorrichtung beispielsweise benachbarte Stapel von je neun Kühlmittelrohren aufweisen. Die Anzahl von übereinander angeordneten Kühlmittelrohren bestimmt eine Höhe der Vorrichtung.

Das erste und das zweite Kühlmittel können beispielsweise als Fluide mit gleicher oder unterschiedlicher Zusammensetzung vorliegen, die sich jeweils gut zum Wärmeaustausch eignen. Ferner können das erste und das zweite Kühlmittel im Betrieb der Vorrichtung unterschiedliche Temperaturen aufweisen, z.B. kann das erste Kühlmittel eine höhere Temperatur als das zweite Kühlmittel aufweisen, wobei jedoch beide Temperaturen niedriger als die der durch die Verdichtung erwärmten Ladeluft sind. Entsprechend kann die Kühlung der Ladeluft so erfolgen, dass die Ladeluft durch Wärmeübertrag zum in dem ersten Kühlerteil der Vorrichtung geführten ersten Kühlmittel vorgekühlt wird und durch Wärmeübertrag mit dem in dem zweiten Kühlerteil der Vorrichtung geführten zweiten Kühlmittel weiter auf eine Zieltemperatur abgekühlt wird.

Gemäß der Erfindung weist die Vorrichtung einen ersten Boden und einen dazugehörigen ersten Kasten auf, der einen Endbereich der Mehrzahl von ersten Kühlmittelrohren und der Mehrzahl von zweiten Kühlmittelrohren umschließt. Ferner weist die Vorrichtung einen zweiten Boden mit einem zugehörigen zweiten Kasten auf, der einen dem Endbereich gegenüberliegenden weiteren Endbereich der Mehrzahl von ersten Kühlmittelrohren und der Mehrzahl von zweiten Kühlmittelrohren umschließt.

Der erste und zweite Boden können z.B. jeweils mit einem Kasten in Form einer Kappe verbunden sein, die den Endbereich bzw. den weiteren Endbereich aufnimmt. Der Endbereich und der weitere Endbereich können so von dem ersten bzw. zweiten Boden mit jeweiligem Kasten umschlossen sein, dass die einzelnen Kühlmittelrohre innerhalb der Vorrichtung starr fixiert sind. So kann die Vorrichtung auf einfache Weise kompakt und leichtgewichtig realisiert werden.

Ferner weist der erste Kasten einen ersten Einlassanschluss zum Einlassen des ersten Kühlmittels in die Mehrzahl von ersten Kühlmittelrohren und einen zweiten Einlassanschluss zum Einlassen des zweiten Kühlmittels in die Mehrzahl von zweiten Kühlmittelrohren auf. Der erste und zweite Einlassanschluss können jeweils als sich von dem ersten Kasten nach außen erstreckende Anschlussstutzen ausgeführt sein, die jeweils mit einem geeigneten Anschlussstutzen des ersten und des zweiten Kühlmittelkreislaufs verbunden werden können. Der Kasten kann einen Separator aufweisen, der eine unerwünschte Vermischung des ersten und zweiten Kühlmittels beim Zuführen zu den Kühlmittelrohren verhindert.

Auch weist der erste Kasten ferner einen zweiten Auslassanschluss zum Auslassen des zweiten Kühlmittels aus der Mehrzahl von zweiten Kühlmittelrohren auf. Der zweite Auslassanschluss kann ebenfalls als sich von dem ersten Kasten nach außen erstreckende Anschlussstutzen ausgeführt sein, der jeweils mit einem weiteren geeigneten Anschlussstutzen des zweiten Kühlmittelkreislaufs verbunden werden kann.

Auch weist der zweite Kasten einen ersten Auslassanschluss zum Auslassen des ersten Kühlmittels aus der Mehrzahl von ersten Kühlmittelrohren auf.

Somit erfüllen der erste und der zweite Boden gleichzeitig die Aufgabe des Fixierens der Kühlmittelrohre und in Verbindung mit dem Kasten die Aufgabe der Versorgung der Kühlmittelrohre mit dem jeweils dafür vorgesehenen Kühlmittel. So kann vorteilhafterweise auf separate Einrichtungen zur Kühlmittelrohrfixierung bzw. zur Kühlmittelversorgung verzichtet werden, was eine kompaktere und leichtere Bauweise der Vorrichtung zur Folge hat.

Eine Anordnung des ersten Einlassanschlusses im ersten Kasten und des ersten Auslassanschlusses im zweiten Kasten führt das erste Kühlmittel im I-Flow-Prinzip durch die Vorrichtung. Weiterhin wird bei einer Anordnung des zweiten Einlassanschlusses und des zweiten Auslassanschlusses im ersten Kasten das zweite Kühlmittel im U-Flow-Prinzip durch die Vorrichtung geführt. Der erste und der zweite Boden können zumindest einen Separator aufweisen, der eine unerwünschte Vermischung des ersten und zweiten Kühlmittels beim Zuführen zu den Kühlmittelrohren verhindert.

Gemäß einer Ausführungsform kann der erste Boden einen Flansch aufweisen, der sich zumindest teilweise um einen Umfang der Vorrichtung erstreckt. Beispielsweise kann der Flansch die Vorrichtung als umlaufender und von einer Bodenplatte des ersten Bodens beabstandeter Kragen umfassen. Vorteilhafterweise stellt der Flansch einen einfach herzustellenden Anschlag der Vorrichtung dar, der z.B. ein Einschieben der Vorrichtung in ein Gehäuse eines Ansaugmoduls so begrenzt, dass die Vorrichtung funktionsgerecht in dem Gehäuse des Ansaugmoduls positioniert ist.

Ferner kann die Vorrichtung eine Mehrzahl von Rippen zum Leiten der Ladeluft aufweisen. Dabei kann je eine Rippe der Mehrzahl von Rippen zwischen je einer Lage von in der Quererstreckungsrichtung der Vorrichtung benachbarten Kühlmittelrohren der Mehrzahl von ersten Kühlmittelrohren und der Mehrzahl von zweiten Kühlmittelrohren angeordnet sein. Die Rippen können durchgehend oder getrennt ausgeführt sein. Die Verwendung der Rippen stellt eine einfach umzusetzende Möglichkeit dar, eine Strömung der Ladeluft durch die Vorrichtung so auszurichten oder weiter auszurichten, dass ein optimaler Wirkungsgrad der Vorrichtung erzielt werden kann.

Die vorliegende Erfindung schafft ferner ein Ansaugmodul mit den Merkmalen von Anspruch 6. Das Ansaugmodul kann beispielsweise in geringer Entfernung zu dem Verbrennungsmotor des Fahrzeugs angeordnet sein. Das Gehäuse des Ansaugmoduls kann einen Anschluss für eine Ladeluftführung, kommend von Verdichter oder einem Anschluss für eine Regelungsvorrichtung zur Regelung des Luftmassenstroms, einen Aufnahmebereich für die hier vorgestellte Vorrichtung, der die Öffnung zum Aufnehmen aufweist, und eine Verteileinrichtung zum Verteilen der durch die Vorrichtung konditionierten Ladeluft auf eine Mehrzahl von Zylindern des Verbrennungsmotors umfassen. Die hier genannten Einrichtungen können in der genannten Reihenfolge in einem Strömungsweg der Luft bzw. Ladeluft angeordnet sein. Die Mehrzahl von ersten Kühlmittelrohren kann den ersten Kühlerteil bilden, der zuerst von der Ladeluft durchströmt wird und diese vorkühlt, und die Mehrzahl von zweiten Kühlmittelrohren kann den zweiten Kühlerteil bilden, der anschließend von der vorgekühlten Ladeluft durchströmt wird und diese auf die Zieltemperatur abkühlt.

Die vorliegende Erfindung schafft ferner ein System zum Konditionieren von Ladeluft für einen Verbrennungsmotor eines Fahrzeugs mit den Merkmalen von Anspruch 7. Der Hochtemperaturkühlkreislauf kann mit einem ersten Einlassanschluss und mit einem ersten Auslassanschluss der Vorrichtung zur Kühlung von Ladeluft verbunden sein, um die Vorrichtung zur Kühlung von Ladeluft mit dem ersten Kühlmittel zu versorgen. Entsprechend dazu kann der Niedertemperaturkühlkreislauf mit einem zweiten Einlassanschluss der Vorrichtung zur Kühlung von Ladeluft und mit einem zweiten Auslassanschluss der Vorrichtung zur Kühlung von Ladeluft verbunden sein, um die Vorrichtung zur Kühlung von Ladeluft mit dem zweiten Kühlmittel zu versorgen.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine perspektivische Darstellung eines Abschnitts einer Vorrichtung zur Kühlung von Ladeluft, gemäß einem Ausführungsbeispiel der vorliegenden Erfindung;

- Fig. 2: eine perspektivische Darstellung einer Vorrichtung zur Kühlung von Ladeluft, gemäß einem Ausführungsbeispiel der vorliegenden Erfindung;
- Fig. 3: eine Schnittdarstellung einer Vorrichtung zur Kühlung von Ladeluft, gemäß einem Ausführungsbeispiel der vorliegenden Erfindung;
- Fig. 4a: eine perspektivische Darstellung eines Ansaugmoduls gemäß einem Ausführungsbeispiel der vorliegenden Erfindung; und
- Fig. 4b: eine weitere perspektivische Darstellung des Ansaugmoduls aus Fig. 4a.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Im Folgenden werden Ausführungsbeispiele für einen Ladeluftkühler mit kaskadierter Kühlung durch Hoch- und Niedertemperaturkühlkreislauf zum Einbau in ein Ansaugmodul und ein entsprechendes Ansaugmodul vorgestellt.

Die nachfolgenden Figuren zeigen unter anderem eine Ausführungsform des hier vorgeschlagenen Ladeluftkühlers, die in einem Bauteil beide Kreisläufe verbindet, dennoch sehr kompakt ist und in ein Saugrohr integriert werden kann.

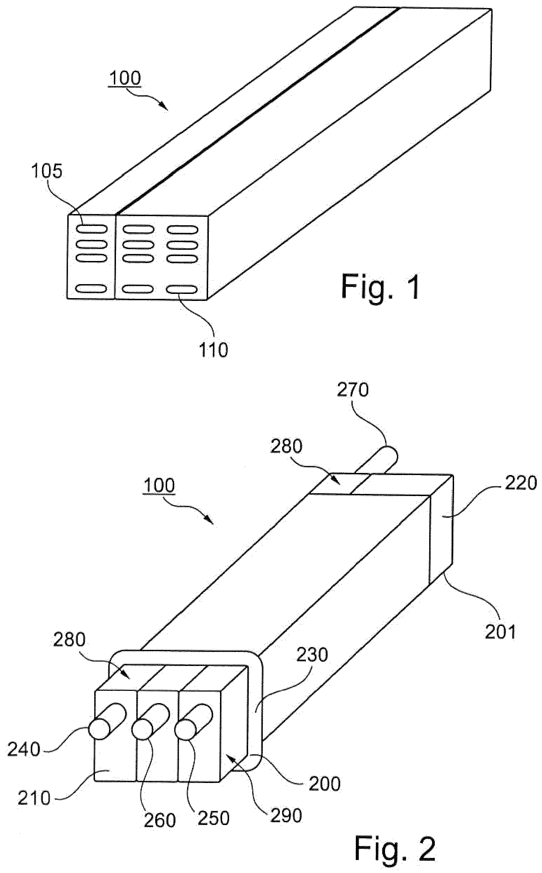

Fig. 1 zeigt in einer perspektivischen Darstellung skizzenhaft eine Vorrichtung 100 zur Kühlung von Ladeluft zum Einbau in ein Ansaugmodul, gemäß einem Ausführungsbeispiel der vorliegenden Erfindung. Gezeigt sind eine Mehrzahl von ersten Kühlmittelrohren 105 und eine Mehrzahl von zweiten Kühlmittelrohren 110, die bevorzugt in einem quaderförmigen Gehäuse, bevorzugt als Flachrohre, jeweils in einer Ebene parallel zueinander angeordnet sind. Der Übersichtlichkeit halber ist jeweils nur eines der ersten Kühlmittelrohre und der zweiten Kühlmittelrohre mit einem Bezugszeichen versehen. Bei dem in Fig. 1 gezeigten Ausführungsbeispiel sind die ersten Kühlmittelrohre 105 als gerade Rohre ausgebildet und als Stapel bzw. Reihe übereinander angeordnet. Die zweiten Kühlmittelrohre 110 sind ebenfalls als gerade Rohre ausgebildet und ebenfalls als Stapel bzw. Reihe übereinander angeordnet. Die Mehrzahl von ersten Kühlmittelrohren 105 bildet einen ersten Kühlerteil zum Führen eines ersten Kühlmittels aus einem Hochtemperatur-Kühlkreis und die Mehrzahl von zweiten Kühlmittelrohren 110 bildet einen zweiten Kühlerteil zum Führen eines zweiten Kühlmittels aus einem Niedertemperatur-Kühlkreis. Die ersten Kühlmittelrohre 105 und die zweiten Kühlmittelrohre 110 können eine identische oder unterschiedliche innere oder äußere Gestalt aufweisen, vorzugsweise eine rechteckige oder elliptische Gestalt bzw. Querschnitt aufweisen. Zwischen den einzelnen Lagen von in Querrichtung der Vorrichtung benachbart angeordneten Kühlmittelrohren 105 und 110 sind Rippen zum Führen von Ladeluft durch die Vorrichtung angeordnet (in der Darstellung in Fig. 1 nicht gezeigt).

Fig. 1 zeigt die Vorrichtung 100 in einer Ausführung als dreireihiges Rohr-Rippe-System mit drei gleichartigen Kühlmittelrohren 105, 110 und durchgehender Rippe, dessen erste Rohrreihe aus Kühlmittelrohren 105 im I-Flow-Prinzip durch den Hochtemperaturkreis durchströmt wird und dessen zweite und dritte Rohrreihe aus Kühlmittelrohren 110 im U-Flow-Prinzip als Kreuzgegenstrom eine optimale Wärmeübertragung zwischen vorgekühlter Ladeluft und dem Niedertemperaturkühlmittel erlauben. Die Vorrichtung in Fig. 1 umfasst 10 Rippen (in der Darstellung nicht gezeigt) und jeweils neun erste 105 und zweite 110 Kühlmittelrohre, von denen jedoch der Übersichtlichkeit halber jeweils nur vier in der Darstellung gezeigt sind. Die Kühlmittelrohre 105 und 110 sind dabei beispielsweise als MPE-Rohre (Multi Port Extruded-Rohre) mit einer Tiefe von je 32 mm ausgebildet. Es können aber auch andere Herstellweisen der Rohre und andere Rohrtiefen verwendet werden. Ein Abstand zwischen den einzelnen Stapeln bzw. Reihen beträgt 4,5 mm. Einschließlich einer oberen und unteren Seitenabdeckung der Vorrichtung beträgt eine Höhe der gezeigten Vorrichtung ca. 65 mm. Eine Breite der gezeigten Vorrichtung beträgt 105 mm. Diese und die folgenden Abmessungen sind lediglich beispielhaft genannt und können variiert werden.

Fig. 2 zeigt in einer perspektivischen Darstellung eine Gesamtansicht eines Ausführungsbeispiels einer Vorrichtung 100 zur Kühlung von Ladeluft in Form eines integrierten und indirekten Ladeluftkühlers. Die Vorrichtung 100 umfasst den in Fig. 1 gezeigten Abschnitt. Gezeigt sind ein erster Kasten 210 und ein zweiter Kasten 220, die die Vorrichtung 100 an einem oberen und einem unteren Ende kappenförmig abschließen. Dabei dichten die Kästen 210 und 220 jeweils gegen einen Boden 200 ab, der die Kühlmittelrohre 105 und 110 aufnimmt und positioniert. Eine Endkante des ersten Bodens 200 ist als ein die Vorrichtung 100 umlaufender Flansch 230 ausgebildet. Anhand einer Anordnung von Ein- und Auslassanschlüssen für die Kühlmittel in den Kästen 210, 220 wird eine Funktionsweise der Vorrichtung 100 nochmals deutlich, gemäß der der erste Kühlerteil im I-Flow-Prinzip und der zweite Kühlerteil im U-Flow-Prinzip betrieben wird. Entsprechend weist der erste Kasten 210 einen ersten Einlassanschluss 240 zum Einlassen des ersten Kühlmittels in die Mehrzahl von ersten Kühlmittelrohren, einen zweiten Einlassanschluss 250 zum Einlassen des zweiten Kühlmittels in die Mehrzahl von zweiten Kühlmittelrohren und einen zweiten Auslassanschluss 260 zum Auslassen des zweiten Kühlmittels aus der Mehrzahl von zweiten Kühlmittelrohren auf. Der zweite Kasten 220 weist einen ersten Auslassanschluss 270 zum Auslassen des ersten Kühlmittels aus der Mehrzahl von ersten Kühlmittelrohren auf. In beiden Kästen trennen Separatoren 280 den Kreislauf des ersten Kühlmittels vom Rest der Vorrichtung ab. Im ersten Kasten 210 ist ein weiterer Separator 290 dargestellt, der zwischen dem zweiten Einlassanschluss 250 und zweiten Auslassanschluss 260 platziert ist und so dafür sorgt, dass durch die Umlenkung des zweiten Kühlmittels im zweiten Kasten der U-Flow (U-Umlenkung) entsteht.

Das in Fig. 2 gezeigte Ausführungsbeispiel der Vorrichtung 100 weist, ohne den ersten Boden 210 und den zweiten Boden 220 gemessen, eine Länge von 220 mm auf und mit dem ersten Boden 210 und dem zweiten Boden 220 gemessen eine Länge von 240 mm auf. Auch können andere Abmessungen realisiert werden.

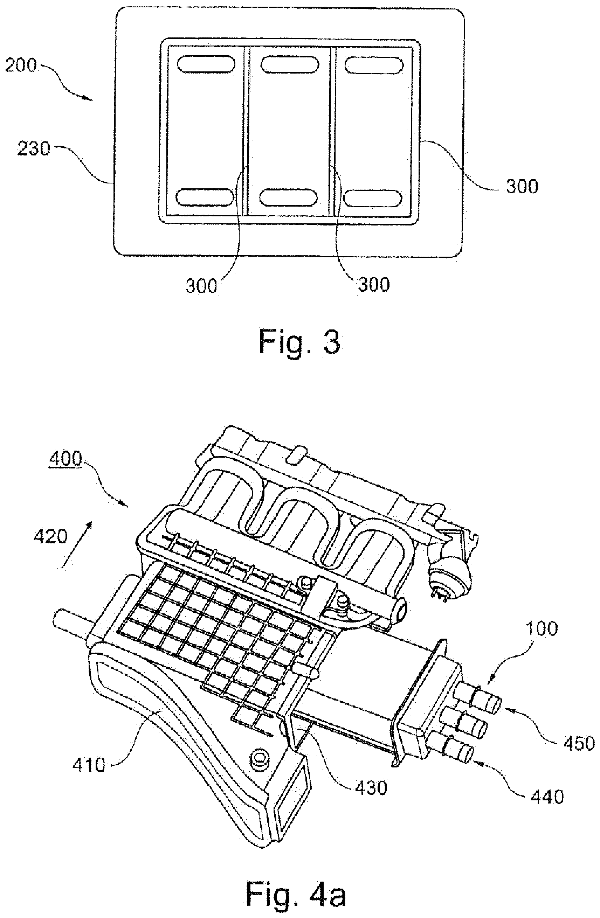

Fig. 3 zeigt eine skizzenhafte Darstellung eines Schnitts durch den ersten Boden 200 der Vorrichtung aus Fig. 2. Gezeigt ist ein Bereich der Vorrichtung, in dem die Stapel von ersten und zweiten Kühlmittelrohren angeordnet sind, wobei der Übersichtlichkeit halber jeweils nur ein oberes und unteres Kühlmittelrohr der jeweiligen Stapel dargestellt ist. Den Bereich der Kühlmittelrohre umlaufend und zwischen den einzelnen Stapeln von Kühlmittelrohren befinden sich Nute 300 für einen fluiddichten Anschluss eines Kühlmittelkastens und von Kühlmittelseparatoren an die Vorrichtung. Der Flansch 230 umläuft einen gesamten Umfang der Vorrichtung. Bei dem in Fig. 3 gezeigten oberen bzw. ersten Boden 210 wird der umlaufende Flansch 230 durch zusätzliches Material in Form eines Überstands in einer Höhe von z.B. 10 mm gebildet. Ein in der Darstellung in Fig. 3 nicht gezeigter unterer bzw. zweiter Boden 201 kann einen umlaufenden Flansch aus zusätzlichem Material beispielsweise in Form eines Überstands in einer Höhe von 2 mm aufweisen.

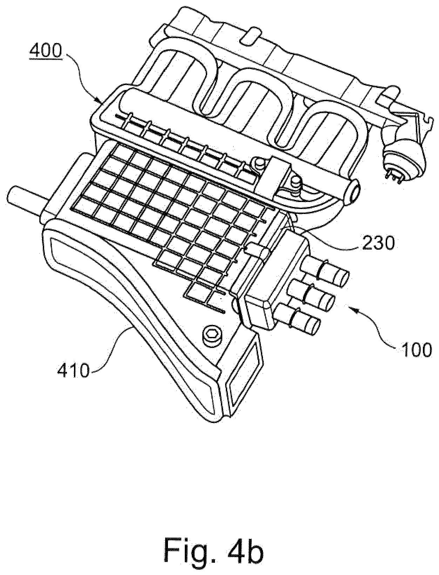

Die Figuren 4a und 4b zeigen zwei Zustände während einer Montage eines Ansaugmoduls 400 zum Führen von Ladeluft von einem Verdichter eines Fahrzeugs zu einem Verbrennungsmotor des Fahrzeugs, gemäß einem Ausführungsbeispiel der vorliegenden Erfindung.

Fig. 4a zeigt in einer perspektivischen Darstellung das Ansaugmodul 400, das ein Gehäuse 410 und die Vorrichtung 100 zur Kühlung von Ladeluft aus Fig. 2 umfasst. Das Gehäuse 410 bildet einen Strömungskanal für Ladeluft, in dem die Ladeluft in einer durch einen Pfeil gekennzeichneten Strömungsrichtung 420 strömt. Ein Aufnahmebereich für die Vorrichtung 100 ist durch eine Öffnung 430 in dem Gehäuse 410 zugänglich. Fig. 4a zeigt die Vorrichtung 100 teilweise durch die Öffnung 430 in das Gehäuse 410 eingeschoben. Die Vorrichtung 100 wird so in das Gehäuse 410 eingeschoben, dass der mit dem Hochtemperaturkühlkreislauf verbundene erste Kühlerteil einen Vorkühler 440 bildet und der mit dem Niedertemperaturkühlkreislauf verbundene zweite Kühlerteil einen Hauptkühler 450 bildet. Bezüglich der Strömungsrichtung 420 der Ladeluft ist der Vorkühler 440 dem Hauptkühler 450 vorgeschaltet.

Fig. 4b zeigt das Ansaugmodul 400 in einem fertig montierten Zustand. Hier ist die Vorrichtung 100 vollständig in das Gehäuse 410 eingeschoben. Der Flansch 230 des oberen bzw. ersten Bodens 200 der Vorrichtung 100 liegt an einem Rand der Öffnung in dem Gehäuse an und schließt diese ab.

Die Figuren 4a und 4b zeigen, dass die zwei Böden des Kühlers 100 so ausgebildet sind, dass der erste bzw. obere Boden 200 als Flansch 230 fungieren kann, während der untere Boden so gestaltet ist, dass er einen geringeren Überstand ausbildet. Daraus ergibt sich die Möglichkeit des seitlichen Einschiebens der Vorrichtung 100 in das Gehäuse des Ansaugmoduls 400.

Neben den in den Figuren gezeigten Ausführungsbeispielen bestehen weitere Alternativen zur Umsetzung des hier vorgeschlagenen Ansatzes. So kann der Kühler als vierreihiges System ausgebildet sein. Auch eine Trennung der Rippe bei Beibehaltung der generellen Bauform ist möglich, wenn dies thermodynamische Vorteile bringen sollte. Daneben besteht die Möglichkeit einer Ausführung des Hochtemperatur-Teiles in einer anderen Rohrtiefe als der nachgeordnete Niedertemperatur-Teil bei Beibehaltung der durchgehenden Rippe. Ferner ist eine Ausführung mit anderen Böden realisierbar, wenn der Kühler in das Ansaugmodulgehäuse eingelegt statt eingeschoben wird.

Die beschriebenen Ausführungsbeispiele sind nur beispielhaft gewählt und können miteinander kombiniert werden.

## Patentansprüche

1. Vorrichtung (100) zur Kühlung von Ladeluft für einen Verbrennungsmotor eines Fahrzeugs, wobei die Vorrichtung die folgenden Merkmale aufweist:
eine Mehrzahl von ersten Kühlmittelrohren (105) zum Führen eines ersten Kühlmittels; und
eine Mehrzahl von zweiten Kühlmittelrohren (110) zum Führen eines zweiten Kühlmittels,
wobei die ersten Kühlmittelrohre und die zweiten Kühlmittelrohre sich entlang einer Längserstreckungsrichtung der Vorrichtung erstrecken und die Mehrzahl von ersten Kühlmittelrohren bezüglich der Mehrzahl von zweiten Kühlmittelrohren in einer Quererstreckungsrichtung der Vorrichtung benachbart angeordnet ist,
mit einem ersten Boden (200) und einen dazugehörigen ersten Kasten (210), der einen Endbereich der Mehrzahl von ersten Kühlmittelrohren (105) und der Mehrzahl von zweiten Kühlmittelrohren (110) umschließt, und
einem zweiten Boden (201) und einen dazugehörigen zweiten Kasten (220), der einen dem Endbereich gegenüberliegenden weiteren Endbereich der Mehrzahl von ersten Kühlmittelrohren und der Mehrzahl von zweiten Kühlmittelrohren umschließt, wobei
der erste Kasten (210) einen ersten Einlassanschluss zum Einlassen des ersten Kühlmittels in die Mehrzahl von ersten Kühlmittelrohren (105) und einen zweiten Einlassanschluss (250) zum Einlassen des zweiten Kühlmittels in die Mehrzahl von zweiten Kühlmittelrohren (110) aufweist, und wobei der zweite Kasten (220) ferner einen ersten Auslassanschluss (270) zum Auslassen des ersten Kühlmittels aus der Mehrzahl von ersten Kühlmittelrohren (105) und der erste Kasten (210) einen zweiten Auslassanschluss (260) zum Auslassen des zweiten Kühlmittels aus der Mehrzahl von zweiten Kühlmittelrohren (110) aufweist, wobei die Mehrzahl von ersten Kühlmittelrohren (105) und die Mehrzahl von zweiten Kühlmittelrohren (110) mit Hilfe von Separatoren (280,290) in den Kästen (210,220) derartig verschaltet ist, dass für das erste Kühlmittel eine I-Fluss-Durchströmung und das zweite Kühlmittel eine U-Fluss-Durchströmung der Vorrichtung realisiert wird.

2. Vorrichtung (100) gemäß Anspruch 1, bei der der erste Boden (200) einen Flansch (230) aufweist, der sich zumindest teilweise um einen Umfang der Vorrichtung erstreckt.

3. Vorrichtung nach Anspruch 1 oder 2, **dadurch gekennzeichnet, dass** die Separatoren entweder eigene Bauteile oder Teile des Bodens (200,201) oder Teile des Tanks (220,210) sind.

4. Vorrichtung nach einem vorhergehenden Anspruch, **dadurch gekennzeichnet, dass** Kästen (210,220) für das erste Kühlmittel bzw. für das zweite Kühlmittel getrennt ausgebildet sind.

5. Vorrichtung (100) gemäß einem der vorangegangenen Ansprüche, die ferner eine Mehrzahl von Rippen zum Leiten der Ladeluft aufweist, wobei je eine Rippe der Mehrzahl von Rippen zwischen je einer Lage von in der Quererstreckungsrichtung der Vorrichtung benachbarten Kühlmittelrohren der Mehrzahl von ersten Kühlmittelrohren (105) und der Mehrzahl von zweiten Kühlmittelrohren (110) angeordnet ist.

6. Ansaugmodul (400) zum Versorgen eines Verbrennungsmotors eines Fahrzeugs mit verdichteter und gekühlter Ladeluft, wobei das Ansaugmodul die folgenden Merkmale aufweist:
ein Gehäuse (410) zum Führen der Ladeluft von einem Verdichter des Fahrzeugs zu dem Verbrennungsmotor des Fahrzeugs, wobei das Gehäuse einen Strömungskanal für die Ladeluft bildet und eine Öffnung (430) zum Aufnehmen einer Vorrichtung zur Kühlung von Ladeluft für einen Verbrennungsmotor eines Fahrzeugs aufweist; und
eine Vorrichtung (100) zur Kühlung von Ladeluft für einen Verbrennungsmotor eines Fahrzeugs gemäß einem der vorangegangenen Ansprüche 1 bis 5, die so durch die Öffnung in das Gehäuse aufgenommen ist, dass die Mehrzahl von ersten Kühlmittelrohren (105) und die Mehrzahl von zweiten Kühlmittelrohren (110) quer zu dem Strömungskanal für die Ladeluft angeordnet sind, derart, dass die Mehrzahl von ersten Kühlmittelrohren sich stromaufwärts in dem Strömungskanal befindet und die Mehrzahl von zweiten Kühlmittelrohren sich stromabwärts in dem Strömungskanal befindet.

7. System zum Konditionieren von Ladeluft für einen Verbrennungsmotor eines Fahrzeugs, wobei das System die folgenden Merkmale aufweist:
ein Ansaugmodul (400) zum Versorgen eines Verbrennungsmotors eines Fahrzeugs mit verdichteter und gekühlter Ladeluft gemäß Anspruch 6; einen Hochtemperaturkühlkreislauf zum Führen des ersten Kühlmittels, das eine hohe Temperatur aufweist, wobei der Hochtemperaturkühlkreislauf mit der Mehrzahl von ersten Kühlmittelrohren (105) verbunden ist; und
einen Niedertemperaturkühlkreislauf zum Führen des zweiten Kühlmittels, das eine niedrige Temperatur aufweist, wobei der Niedertemperaturkühlkreislauf mit der Mehrzahl von zweiten Kühlmittelrohren (110) verbunden ist.

## Claims

1. A device (100) for cooling charge air for an internal combustion engine of a vehicle, wherein the device has the following features:
a plurality of first coolant pipes (105) for conducting a first coolant; and
a plurality of second coolant pipes (110) for conducting a second coolant,
wherein the first coolant pipes and the second coolant pipes extend along a longitudinal extension direction of the device and the plurality of first coolant pipes is arranged adjacent to the plurality of second coolant pipes in a transverse extension direction of the device,
with a first base (200) and an associated first box (210) which surrounds an end region of the plurality of first coolant pipes (105) and of the plurality of second coolant pipes (110), and
a second base (201) and an associated second box (220) which surrounds a further end region opposite the end region of the plurality of first coolant pipes and of the plurality of second coolant pipes,
wherein
the first box (210) has a first inlet connection for the inlet of the first coolant into the plurality of first coolant pipes (105), and
a second inlet connection (250) for the inlet of the second coolant into the plurality of second coolant pipes (110), and wherein the second box (220) further has a first outlet connection (270) for the outlet of the first coolant from the plurality of first coolant pipes (105) and the first box (210) has a second outlet connection (260) for the outlet of the second coolant from the plurality of second coolant pipes (110), wherein the plurality of first coolant pipes (105) and the plurality of second coolant pipes (110) are connected using separators (280, 290) in the boxes (210, 220) such that for the first coolant, an I-flow and for the second coolant, a U-flow through the device is achieved.

2. The device (100) as claimed in claim 1, wherein the first base (200) has a flange (230) which extends at least partly around a periphery of the device.

3. The device as claimed in claim 1 or 2, **characterised in that** the separators are either autonomous components or parts of the base (200, 201) or parts of the tank (220, 210).

4. The device as claimed in any preceding claim, **characterised in that** boxes (210, 220) for the first coolant and second coolant respectively are formed separated.

5. The device (100) as claimed in any of the preceding claims, which further has a plurality of ribs for conducting the charge air, wherein one respective rib of the plurality of ribs is arranged between a respective layer of coolant pipes of the plurality of first coolant pipes (105) and the plurality of second coolant pipes (110) which are adjacent in the transverse extension direction of the device.

6. An intake module (400) for supplying an internal combustion engine of a vehicle with compressed and cooled charge air, wherein the intake module has the following features:
a housing (410) for conducting the charge air from a compressor of the vehicle to the internal combustion engine of the vehicle, wherein the housing forms a flow channel for the charge air and has an opening (430) for receiving a device for cooling charge air for an internal combustion engine of a vehicle; and
a device (100) for cooling charge air for an internal combustion engine of a vehicle as claimed in any of the preceding claims 1 to 5, which is received by the opening in the housing such that the plurality of first coolant pipes (105) and the plurality of second coolant pipes (110) are arranged transverse to the flow channel for the charge air, such that the plurality of first coolant pipes is located upstream in the flow channel and the plurality of second coolant pipes is located downstream in the flow channel.

7. A system for conditioning charge air for an internal combustion engine of a vehicle, wherein the system has the following features:
an intake module (400) for supplying an internal combustion engine of a vehicle with compressed and cooled charge air as claimed in claim 6;
a high-temperature coolant circuit for conducting the first coolant, which has a high temperature, wherein the high-temperature coolant circuit is connected to the plurality of first coolant pipes (105); and
a low-temperature coolant circuit for conducting the second coolant, which has a low temperature, wherein the low-temperature coolant circuit is connected to the plurality of second coolant pipes (110).

## Revendications

1. Dispositif (100) servant au refroidissement de l'air de suralimentation pour un moteur à combustion interne d'un véhicule, où le dispositif présente les caractéristiques suivantes, en ayant :
une pluralité de premiers tubes de liquide de refroidissement (105) servant au guidage d'un premier liquide de refroidissement ; et
une pluralité de deuxièmes tubes de liquide de refroidissement (110) servant au guidage d'un second liquide de refroidissement,
où les premiers tubes de liquide de refroidissement et les deuxièmes tubes de liquide de refroidissement s'étendent le long d'une direction d'étendue longitudinale du dispositif, et la pluralité de premiers tubes de liquide de refroidissement est disposée, dans une direction d'étendue transversale du dispositif, de façon contiguë par rapport à la pluralité de deuxièmes tubes de liquide de refroidissement,
ayant un premier fond (200) et un premier caisson (210) associé audit premier fond, lequel premier caisson entoure une zone d'extrémité de la pluralité de premiers tubes de liquide de refroidissement (105) et de la pluralité de deuxièmes tubes de liquide de refroidissement (110), et
ayant un deuxième fond (201) et un deuxième caisson (220) associé audit deuxième fond, lequel deuxième caisson entoure une autre zone d'extrémité - placée à l'opposée de la zone d'extrémité entourée par le premier caisson - de la pluralité de premiers tubes de liquide de refroidissement et de la pluralité de deuxièmes tubes de liquide de refroidissement,
où le premier caisson (210) présente
un premier raccordement d'entrée servant à l'entrée du premier liquide de refroidissement dans la pluralité de premiers tubes de liquide de refroidissement (105) et
un deuxième raccordement d'entrée (250) servant à l'entrée du second liquide de refroidissement dans la pluralité de deuxièmes tubes de liquide de refroidissement (110), et
où le deuxième caisson (220) présente en outre un premier raccordement de sortie (270) servant à l'évacuation du premier liquide de refroidissement sortant de la pluralité de premiers tubes de refroidissement (105), et le premier caisson (210) présente un deuxième raccordement de sortie (260) servant à l'évacuation du second liquide de refroidissement sortant de la pluralité de deuxièmes tubes de liquide de refroidissement (110),
où la pluralité de premiers tubes de liquide de refroidissement (105) et la pluralité de deuxièmes tubes de liquide de refroidissement (110) sont reliés entre eux dans les caissons (210, 220), à l'aide de séparateurs (280, 290), de manière telle que soit réalisée à travers le dispositif, pour le premier liquide de refroidissement, une circulation d'un flux en forme de I et, pour le second liquide de refroidissement, une circulation d'un flux en forme de U.

2. Dispositif (100) selon la revendication 1, dans lequel le premier fond (200) présente une bride (230) qui s'étend au moins partiellement autour d'une circonférence du dispositif.

3. Dispositif selon la revendication 1 ou 2, **caractérisé en ce que** les séparateurs sont soit des composants propres, soit des parties du fond (200, 201), ou bien des parties du caisson (220, 210).

4. Dispositif selon l'une quelconque des revendications précédentes, **caractérisé en ce que** les caissons (210, 220) sont configurés en étant séparés pour le premier liquide de refroidissement ou pour le second liquide de refroidissement.

5. Dispositif (100) selon l'une quelconque des revendications précédentes, lequel dispositif présente en outre une pluralité d'ailettes servant à diriger l'air de suralimentation, où à chaque fois une ailette de la pluralité d'ailettes est disposée à chaque fois entre une rangée de tubes de liquide de refroidissement - contigus dans la direction d'étendue transversale du dispositif - de la pluralité de premiers tubes de liquide de refroidissement (105) et de la pluralité de deuxièmes tubes de liquide de refroidissement (110).

6. Module d'admission (400) servant à l'alimentation d'un moteur à combustion interne d'un véhicule, en air de suralimentation comprimé et refroidi, où le module d'admission présente les caractéristiques suivantes, en ayant :
un carter (410) servant au guidage de l'air de suralimentation circulant depuis un compresseur du véhicule jusqu'au moteur à combustion interne du véhicule, où le carter forme un conduit d'écoulement pour l'air de suralimentation et présente une ouverture (430) servant au logement d'un dispositif servant au refroidissement de l'air de suralimentation pour un moteur à combustion interne d'un véhicule ; et
un dispositif (100) servant au refroidissement de l'air de suralimentation pour un moteur à combustion interne d'un véhicule selon l'une quelconque des revendications précédentes 1 à 5, lequel dispositif est logé dans le carter, à travers l'ouverture, si bien que la pluralité de premiers tubes de liquide de refroidissement (105) et la pluralité de deuxièmes tubes de liquide de refroidissement (110) sont disposées de façon transversale par rapport au conduit d'écoulement prévu pour l'air de suralimentation, de manière telle que la pluralité de premiers tubes de liquide de refroidissement se trouve placée en amont dans le conduit d'écoulement,
et que la pluralité de deuxièmes tubes de liquide de refroidissement se trouve placée en aval dans le conduit d'écoulement.

7. Système servant au conditionnement de l'air de suralimentation pour un moteur à combustion interne d'un véhicule, où le système présente les caractéristiques suivantes, en ayant :
un module d'admission (400) servant à l'alimentation d'un moteur à combustion interne d'un véhicule, en air de suralimentation comprimé et refroidi selon la revendication 6 ;
un circuit de refroidissement à haute température servant au guidage du premier liquide de refroidissement qui présente une température élevée, où le circuit de refroidissement à haute température est relié à la pluralité de premiers tubes de liquide de refroidissement (105) ; et
un circuit de refroidissement à basse température servant au guidage du second liquide de refroidissement qui présente une basse température, où le circuit de refroidissement à basse température est relié à la pluralité de deuxièmes tubes de liquide de refroidissement (110).
